# EUROPÄISCHE PATENTANMELDUNG

(11) **EP 4 762 914 A1**
(43) Veröffentlichungstag der Anmeldung: **24.06.2026**
(21) Anmeldenummer: 25211938.3
(22) Anmeldetag: 29.10.2025
(51) Int. Cl.: A01F 25/18, G01N 9/00

(54) **VERFAHREN ZUM BEARBEITEN VON PFLANZENMATERIAL, SYSTEM ZUR DICHTEBESTIMMUNG VON PFLANZENMATERIAL UND DAMIT AUSGESTATTETES LANDWIRTSCHAFTLICHES FAHRZEUG, SOWIE COMPUTERPROGRAMM**

(30) Priorität: 18.12.2024 DE 102024138527
(71) Anmelder: CLAAS Selbstfahrende Erntemaschinen GmbH, 33428 Harsewinkel (DE)
(72) Erfinder: Neitemeier, Dennis, 59510 Lippetal (DE); Witte, Johann, 58730 Fröndenberg (DE); Birkmann, Christian, 33775 Versmold (DE); Fischer, Josef, 88400 Biberach (DE); Bönig Dr., Ingo, 33330 Gütersloh (DE); Belau, Sven Carsten, 33332 Gütersloh (DE); Brune, Markus, 33428 Harsewinkel (DE); Dirksen, Matthis, 48231 Warendorf (DE); Titkemeier, Daniel, 49080 Osnabrück (DE)
(74) Vertreter: CLAAS Gruppe

(57) **Zusammenfassung**

Ein Verfahren zum Bearbeiten von Pflanzenmaterial umfasst die Schritten:
a) Bilden einer Schicht (21) aus dem Pflanzenmaterial (S1);
b) Platzieren eines Sensors (1), der wenigstens einen Kondensator mit zwei Elektroden (3, 9; 3, 10) aufweist, an einer Oberfläche der Schicht (21);
c) Beaufschlagen des Kondensators mit einem Wechselspannungssignal, um ein in die Schicht (21) eindringendes elektrisches Wechselfeld (22) zu erzeugen; und
d) Messen einer mit der Impedanz des Kondensators verknüpften Größe, um auf die Dichte des Pflanzenmaterials in der Schicht (21) zu schließen (S2),
e) Entscheiden (S6), ob die Dichte des Pflanzenmaterials einer vorgegebenen Anforderung genügt;
f) Verdichten (S3) der Schicht (21), wenn entschieden wird, dass die Dichte des Pflanzenmaterials der Anforderung nicht genügt.

## Beschreibung

Verfahren zum Bearbeiten von Pflanzenmaterial, System zur Dichtebestimmung von Pflanzenmaterial und damit ausgestattetes landwirtschaftliches Fahrzeug

Die vorliegende Erfindung betrifft ein Verfahren zum Bearbeiten von Pflanzenmaterial, das auf einer Messung der Dichte des Pflanzenmaterials basiert, ein System zum Durchführen einer solchen Dichtemessung, und ein landwirtschaftliches Fahrzeug, mit dem das Verfahren ausführbar ist bzw. das mit dem System ausgestattet ist.

Aus DE 10 2021 122 455 A1 ist bekannt, die Dichte von Pflanzenmaterial in einem Auswurfkrümmer eines Feldhäckslers zu erfassen, indem ein Kondensator in einem an einer Wand des Auswurfkrümmers angeordneten Sensor mit einem Wechselspannungssignal beaufschlagt wird, um ein sich in den Auswurfkrümmer hinein erstreckendes elektrisches Wechselfeld zu erzeugen, und der Massenstrom des Pflanzenmaterials durch den Auswurfkrümmer anhand des Einflusses des Materials auf die Impedanz des Kondensators abgeschätzt wird.

Eine Aufgabe der Erfindung ist, weitere Anwendungen eines kapazitiven Sensors in der Landtechnik anzugeben.

Die Aufgabe wird gelöst durch ein Verfahren zum Bearbeiten von Pflanzenmaterial, insbesondere von Silagematerial, mit den Schritten:
a) Bilden einer Schicht aus dem Pflanzenmaterial;
b) Platzieren eines Sensors, der wenigstens einen Kondensator mit zwei Elektroden aufweist, an einer Oberfläche der Schicht;
c) Beaufschlagen des Kondensators mit einem Wechselspannungssignal, um ein in die Schicht eindringendes elektrisches Wechselfeld zu erzeugen; und
d) Messen einer mit der Impedanz des Kondensators verknüpften Größe, um auf die Dichte des Pflanzenmaterials in der Schicht zu schließen,
gekennzeichnet durch die Schritte:
e) Entscheiden, ob die Dichte des Pflanzenmaterials einer vorgegebenen Anforderung genügt;
f) Verdichten der Schicht, wenn entschieden wird, dass die Dichte des Pflanzenmaterials der Anforderung nicht genügt.

Die Messung erlaubt es, ein Verdichten "auf Verdacht" zu vermeiden; indem unnötige Verdichtungsschritte entfallen, kann der Zeit- und Energieaufwand für die Verdichtung auf das unverzichtbare Minimum begrenzt werden.

Indem der Schritt d) an verschiedenen Orten der Schicht durchgeführt wird, kann eine Dichtekarte der Schicht erstellt werden, die die Dichte der Schicht für verschiedene Regionen der Schicht ortsaufgelöst angibt. Dies erlaubt es, die die Schritte e) und f) für verschiedene Regionen der Schicht unabhängig voneinander durchzuführen, d.h. für jede Region einzeln zu entscheiden, ob die Dichte ausreichend ist oder nicht, und anschließende Verdichtungsschritte zumindest weitgehend auf diejenigen Regionen zu beschränken, in denen die Dichte für nicht ausreichend befunden worden ist. Die anschließenden Verdichtungsschritte exakt auf die Regionen mit unzureichender Verdichtung zu beschränken, ist nicht immer möglich; um eine solche Region zu erreichen, kann es notwendig sein, eine andere, bereits ausreichend verdichtete zu durchqueren, wodurch auch diese eventuell ein weiteres Mal verdichtet wird.

Da einmaliges Verdichten nicht zwangsläufig ausreicht, um die ausreichende Dichte zu erreichen, wird vorzugsweise nach dem Verdichten wenigstens einer Region der Schicht die Dichte der Schicht in der Region erneut ermittelt, um festzustellen, ob ein weiteres Mal verdichtet werden muss.

Die maximal erreichbare Dichte ist die einer Schicht, aus der jegliche Luft verdrängt ist. Je weniger Luft eine Schicht noch enthält, umso schwieriger ist es für die restliche Luft, aus der Schicht zu entweichen. Dementsprechend wird im Laufe mehrerer Verdichtungsschritte der Dichtenzuwachs der Schicht immer geringer. Anhand der Art und Weise, wie sich der Dichtezuwachs im Laufe mehrerer Verdichtungsschritte ändert, kann abgeschätzt werden, welches die maximal erreichbare Dichte ist, und die Anforderung, die der Entscheidung von Schritt e) zugrunde gelegt wird, kann anhand dieser maximal erreichbaren Dichte festgelegt werden. Für eine Abschätzung, welche Dichte im Laufe weiterer Verdichtungsschritte erreichbar sein könnte, können Daten von Verdichtungsprozessen aus der Vergangenheit herangezogen werden. Dabei ist denkbar, anhand einer bekannten Zusammensetzung der Schicht, insbesondere einer Pflanzenart, von der das Material der Schicht herrührt, Daten von Verdichtungsprozessen aus der Vergangenheit auszuwählen, die an Schichten mit derselben Zusammensetzung gewonnen wurden. Alternativ können im Laufe mehrerer Verdichtungen der Schicht erhaltene Dichtewerte herangezogen werden, um aus einem Bestand an Daten vergangener Verdichtungsprozesse solche auszuwählen, die eine ähnliche Entwicklung der Dichtewerte aufweisen und daher am ehesten eine Prognose der weiteren Entwicklung der Dichte ermöglichen.

Das Verdichten kann insbesondere durch Überfahren der Schicht mit einem Fahrzeug erfolgen.

Die in Schritt d) erfassten Daten können herangezogen werden, um eine beim Verdichten abzufahrende Route für das Fahrzeug festzulegen. Kriterien für die Festlegung der Route können eine Minimierung von Überfahrungen bereits ausreichend verdichteter Bereiche, der Fahrstrecke oder der Fahrzeit sein.

Wenn der Sensor am Fahrzeug montiert ist, können gleichzeitig mit dem Verdichten auch die für die Dichtekarte benötigten ortsaufgelösten Messdaten gesammelt werden, wobei von der Platzierung am Fahrzeug abhängt, ob die gesammelten Daten dem Zustand vor dem Verdichten oder dem danach entsprechen.

Der Sensor kann an einem Schiebeschild montiert sein, das im Rahmen des Schritts a) eingesetzt werden kann, um Material zu einer Schicht von gleichmäßiger, gewünschter Dicke auszubreiten. Da der Schiebeschild typischerweise bezogen auf die Fahrtrichtung vorn am Fahrzeug montiert ist, misst ein daran angebrachter Sensor die Dichte der Schicht, unmittelbar bevor diese durch Überrollen mit den Rädern des Fahrzeugs verdichtet wird. Ein an einer Liftachse des Fahrzeugs angeordneter Sensor kann die Dichte der Schicht nach dem Überrollen durch Räder einer Vorderachse, aber vor dem Überrollen durch die Räder der Hinterachse erfassen. Eine Silowalze wird im Betrieb üblicherweise vom Fahrzeug gezogen; ein daran angebrachter Sensor erfasst die Schicht daher erst, nachdem sie von den Rädern des Fahrzeugs überrollt worden ist; der Sensor kann angeordnet sein, um die Schicht vor oder hinter der Silowalze zu erfassen.

Das Verdichten durch Überrollen mit den Rädern eines Fahrzeugs bringt es mit sich, dass unzureichend verdichtete Bereiche meist in Fahrtrichtung des Fahrzeugs langgestreckt sind. Um solche Bereiche zuverlässig erfassen zu können, ist es zweckmäßig, wenn der Sensor am Fahrzeug quer zur Fahrtrichtung beweglich montiert ist.

Die aus den Daten des Sensors erstellte Dichtekarte kann an Bord des Fahrzeugs angezeigt werden, um dem Fahrer des Fahrzeugs anzuzeigen, ob und ggf. welche Bereiche der Schicht fertig verdichtet sind und welche noch weiterer Verdichtung bedürfen.

Um einen Bordcomputer des Fahrzeugs von rechen- und datenintensiven Aufgaben zu entlasten, kann vorgesehen sein, dass Daten des Sensors an einen fahrzeugexternen Computer, insbesondere ein CEMOS-System, übertragen werden, und ein Zielwert der Dichte, insbesondere unter Rückgriff auf die oben erwähnten Daten vergangener Verdichtungsprozesse, kann von dem fahrzeugexternen Computer festgelegt werden.

Die Schritte a) des Bildens einer Schicht, d) des Messens und f) des Verdichtens können auf der Oberfläche einer bereits verdichteten Schicht vorgenommen werden. Im Laufe mehrerer Iterationen kann so ein Stapel an verdichteten Schichten aufgebaut werden, der dick genug ist, um eine höhere Temperatur als die der Umgebung zu halten und so eine effiziente Gärung des Pflanzenmaterials zu gewährleisten. Die einzelne Schicht wiederum kann dabei dünn genug sein, um im Laufe einiger weniger Überrollvorgänge ausreichend verdichtet zu werden. Insbesondere kann die Dicke der Schicht passend zur Eindringtiefe des Wechselfelds des Kondensators gewählt werden, insbesondere so, dass spätestens nach einmaligem Verdichten einer Region der Schicht die Eindringtiefe des elektrischen Wechselfelds des Kondensators sich über die gesamte Dicke der Region erstreckt und so eine Beurteilung der Dichte über die gesamte Dicke der Schicht hinweg ermöglicht.

Der Sensor kann mehrere Kondensatoren umfassen, wobei der Abstand zwischen den Elektroden für jeden der mehreren Kondensatoren unterschiedlich ist. Aus dem unterschiedlichen Abstand resultiert eine unterschiedliche Eindringtiefe, so dass aus den Messdaten der mehreren Kondensatoren Aufschluss über die Dichte der Schicht in verschiedenen Entfernungen von ihrer Oberfläche gewonnen werden kann.

Die Aufgabe wird ferner gelöst durch ein System zum Bestimmen einer Dichte einer Schicht aus Pflanzenmaterial, umfassend einen Sensor, der wenigstens einen Kondensator mit zwei Elektroden aufweist, eine Wechselspannungsquelle zum Beaufschlagen des Kondensators mit einem Wechselspannungssignal und einen Prozessor, der angepasst und/oder konfiguriert ist, um die Schritte c) bis e) des oben beschriebenen Verfahrens auszuführen.

Zur Ausführung der restlichen Verfahrensschritte bedarf es einer landwirtschaftlichen Arbeitsmaschine, die mit einem System wie oben beschrieben ausgestattet ist.

Gegenstand der Erfindung ist ferner ein Computerprogramm, umfassend Instruktionen, deren Ausführung durch einen Computer diesen veranlasst, die Schritte c) bis e) des obigen Verfahrens auszuführen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen im Rahmen des erfindungsgemäßen Verfahrens verwendeten Sensor;
- Fig. 2.: Ein Flussdiagramm des Verfahrens;
- Fig. 3: eine Draufsicht auf einen Fahrsilo mit einem zum Verdichten von Pflanzenmaterial in dem Silo eingesetzten Fahrzeug gemäß einer ersten Ausgestaltung der Erfindung;
- Fig. 4: ein Detail eines Schiebeschilds des Fahrzeugs aus Fig. 3;
- Fig. 5: eine Seitenansicht eines Fahrzeugs auf einem Fahrsilo gemäß einer zweiten Ausgestaltung der Erfindung;
- Fig. 6: eine Seitenansicht eines Fahrzeugs auf einem Fahrsilo gemäß einer dritten Ausgestaltung der Erfindung;
- Fig. 7: eine exemplarische Dichtekarte sowie, gemäß einer Variante der Erfindung, einen vom Sensor des Fahrzeugs zurückgelegten Weg; und
- Fig. 8: nach aufeinanderfolgenden Verdichtungen eines laufenden Verdichtungsprozesses an einer gleichen Schicht gemessene Dichten sowie zum Vergleich in vergangenen Verdichtungsprozessen gemessene Dichten.

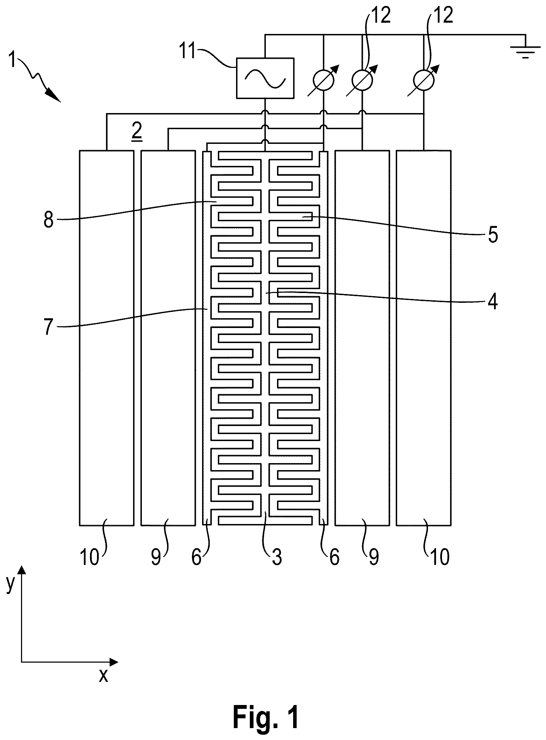

Fig. 1 zeigt einen kapazitiven Sensor 1 in einer Draufsicht auf ein sich in einer x-y-Ebene erstreckendes Substrat 2 mit mehreren darauf angeordneten planaren Elektroden. Eine zentrale Elektrode 3 ist mit einer Wechselspannungsquelle 11 verbunden und umfasst einen in y-Richtung langgestreckten Mittelleiter 4 und von diesem in regelmäßigen Abständen in x-Richtung abzweigende Finger 5. Erste seitliche Elektroden 6 auf beiden Seiten der zentralen Elektrode 3 umfassen ihrerseits einen zum Mittelleiter 5 parallelen Leiter 7 und von diesem in die Zwischenräume zwischen den Fingern 5 der zentralen Elektrode 3 eingreifende Finger 8. Indem sich die Finger 5 und 8 auf großer Länge mit geringem Abstand gegenüberliegen, bilden die Elektroden 3 und 6 einen ersten Kondensator von relativ großer Kapazität, dessen Feld in z-Richtung, senkrecht zur x-y-Ebene mit zunehmendem Abstand von der Oberfläche des Substrats 2 schnell abnimmt.

Jenseits der ersten seitlichen Elektroden 6 erstrecken sich zweite Elektroden 9 in Form von sich in y-Richtung langgestreckten Streifen. Diese bilden mit der zentralen Elektrode 3 einen zweiten Kondensator mit größerem Elektrodenabstand, dessen elektrisches Feld sich in z-Richtung weiter erstreckt als das des ersten Kondensators. Die zweiten Elektroden 9 sind verbunden mit einem Messinstrument 12 zum Messen einer Größe, die einen Rückschluss auf die Kapazität des zweiten Kondensators erlaubt, wie etwa eines durch die Wechselspannung der Quelle 11 induzierten Blindstroms, einer Resonanzfrequenz des Kondensators oder dergleichen.

Dritte Elektroden 10 erstrecken sich jenseits der zweiten Elektroden 9 parallel zu diesen. Sie bilden mit der zentralen Elektrode 3 einen dritten Kondensator mit nochmals größerem Elektrodenabstand und dementsprechend weiter in z-Richtung ausgedehntem Feld. Die Elektroden 10 sind mit einem weiteren Messinstrument 12 zum Messen einer Größe verbunden, die einen Rückschluss auf die Kapazität des dritten Kondensators erlaubt.

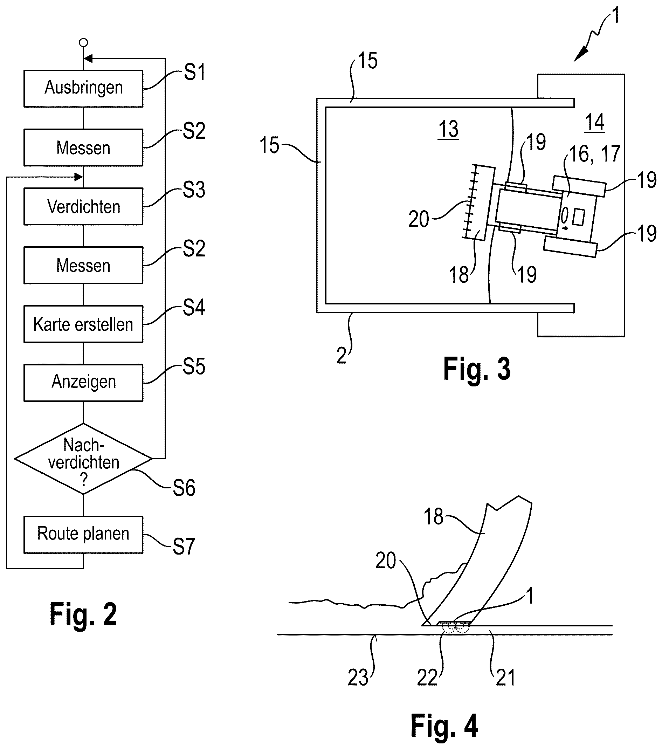

Fig. 2 zeigt ein Flussdiagramm eines Verfahrens, in dem der Sensor 1 zum Einsatz kommt. In Schritt S1 des Verfahrens wird in einem Fahr- oder Flachsilo 13 eine Schicht aus Pflanzenmaterial ausgebracht. Fig.3 zeigt eine Draufsicht auf einen solchen Fahrsilo 13. Im einfachsten Fall umfasst der Fahrsilo 13 lediglich eine feste Grundplatte 14, auf der das des Pflanzenmaterial aufgeschüttet und anschließend zu einer Schicht ausgebreitet wird. Im hier gezeigten Fall ist er an drei Seiten von Wänden 15 begrenzt und nur an einer Seite offen, so dass ein Fahrzeug 16 hinein- und hinausfahren kann, um das Pflanzenmaterial abzuladen und zu verdichten. Das in Fig. 3 gezeigte Fahrzeug 16 ist ein Traktor 17 mit vorgebautem höhenverstellbarem Schiebeschild 18. Wenn sich der Traktor 17 auf dem Silo 13 hin- und herbewegt, breitet der Schiebeschild 18 dort abgeladenes Pflanzenmaterial zu einer Schicht 21 aus, deren Dicke durch die Höheneinstellung des Schiebeschilds 18 vorgegeben ist. Bereiche der Schicht, die dabei von den Rädern 19 des Traktors 17 überrollt werden, erfahren gleichzeitig eine Verdichtung, so dass sich der Schritt S1 des Ausbringens der Schicht und ein Schritt S3 des Verdichtens der Schicht, die in Fig. 2 aufeinanderfolgend dargestellt sind, in der Praxis zeitlich überschneiden können.

Fig. 4 zeigt einen unteren Teil des Schiebeschilds 18 in einem schematischen Schnitt. Eine Unterkante 20 des Schiebeschilds 18 erstreckt sich quer zur Schnittebene. Entlang der Unterkante 20 sind mehrere Sensoren 1 aufeinanderfolgend angeordnet. Die Längsrichtung der Unterkante 20 fällt mit der y-Richtung der Sensoren 1 zusammen, d.h. ihre Elektroden 3, 6, 9, 10 erstrecken sich in Längsrichtung der Unterkante 20, so dass, wenn der Schiebeschild 18 über die Schicht 21 aus Pflanzenmaterial bewegt wird, jeder Sensor 1 die mittlere Dichte des Pflanzenmaterials unter dem Schiebeschild 18 entlang eines Streifens erfasst, dessen Breite der Länge der Elektroden entspricht. D.h. ein Schritt des Messens S2 der Dichte der Schicht findet hier statt, bevor die Schicht durch das darüberrollende Fahrzeug verdichtet wird.

Die Höhe des Schiebeschilds 18 ist so eingestellt, dass das elektrische Feld des dritten Kondensators, in Fig. 4 mit 22 bezeichnet, sich im Wesentlichen über die gesamte Dicke der Schicht 21 erstreckt. Anhand dieses Feldes 22 und des weniger weit eindringenden Feldes des zweiten Kondensators kann nicht nur die Dichte der Schicht 21 beurteilt werden, sondern auch, ob diese in der Vertikalen homogen ist. Die in Fig. 4 mit 23 bezeichnete untere Grenze der Schicht 19 kann die Oberfläche der Grundplatte 14 oder einer bereits früher verdichteten Schicht Pflanzenmaterial sein. Indem auf einer verdichteten Schicht erneut Pflanzenmaterial ausgebracht und verdichtet wird, kann im Laufe der Zeit ein Aufbau aus zahlreichen Schichten geschaffen werden, dessen Dicke die Eindringtiefe des Feldes 22 um ein Vielfaches übersteigt.

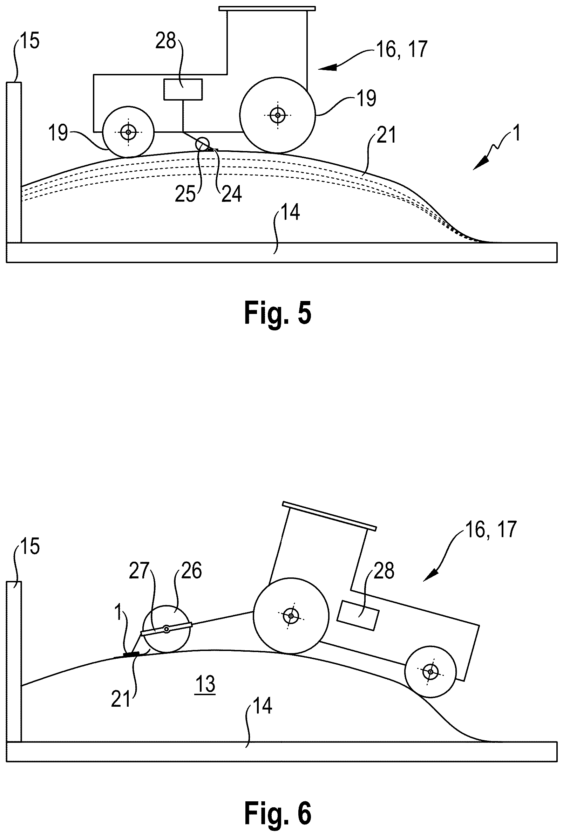

Fig. 5 zeigt auf einem solchen vielschichtigen Aufbau ein Fahrzeug 16 gemäß einer zweiten Ausgestaltung der Erfindung. Die Sensoren 1 sind hier an einem Gleiter 24 montiert, der, an das Chassis des Fahrzeugs 16 gekoppelt, zwischen dessen Vorder- und Hinterrädern 19 auf der zu verdichtenden Schicht 21 aufliegt. Während in der Ausgestaltung der Fig. 3 die Sensoren 1 vor den Rädern 19 angeordnet sind und deren Einfluss auf die Dichte der Schicht 21 nicht erfassen können, erfassen die Sensoren 1 in der Ausgestaltung der Fig. 5. zumindest eine auf die Vorderräder zurückgehende Verdichtung, d.h. die Verfahrensschritte S2 und S3 überschneiden sich zeitlich.

Um den Gleiter 24 von der Schicht 19 abheben zu können, z.B. beim Rückwärtsfahren, kann dieser mit einer Liftachse 25 des Fahrzeugs 21 verbunden sein, oder er kann ein Rad der Liftachse 25 ersetzen.

Fig. 6 zeigt als Fahrzeug 16 gemäß einer dritten Ausgestaltung der Erfindung einen Traktor 17 mit angehängter Silowalze 26. Die Silowalze 26 ist ein Zylinder von hohem Gewicht und einer Länge, die wenigstens dem Abstand zwischen den Räder einer Achse des Traktors 17 entspricht, so dass in einer Vorwärtsbewegung des Traktors 17 nicht nur die Regionen der Schicht 21 verdichtet werden, über die die Räder des Traktors 17 unmittelbar hinwegrollen, sondern auch eine Fläche dazwischen. An einen Rahmen 27, in dem die Silowalze 26 drehbar gehalten ist, ist ein Gleiter 24 angehängt. Sensoren 1 des Gleiters 24 erfassen die Dichte der Schicht 21 (S2) nachdem diese durch die Räder 19 und die Silowalze 26 verdichten worden ist (S3).

Bei allen oben beschriebenen Ausgestaltungen sammelt ein Bordcomputer 28 des Fahrzeugs 16 die in Schritt S2 gewonnenen Daten der Sensoren 1, verknüpft diese in Schritt S4 mit z.B. mit Hilfe eines GPS-Systems gewonnener Positionsinformation zu einer Dichtekarte des Silos 13, und zeigt sie in Schritt S5 auf einem Bildschirm in der Fahrerkabine des Fahrzeugs 16 an.

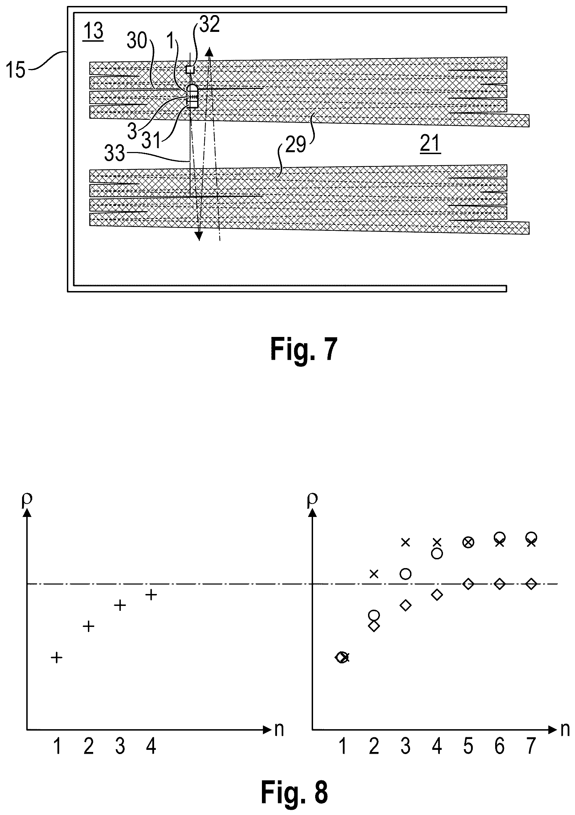

Fig. 7 zeigt ein Beispiel einer solchen Dichtekarte. Eine Kreuzschraffur kennzeichnet Regionen 29 der Silooberfläche, in denen die Schicht 21 durch Überrollen mit den Rädern 19 des vor und zurückfahrenden Fahrzeugs 16 verdichtet ist, und dazwischen minder dichte, noch nicht oder weniger oft überrollte Regionen 30. Anhand der auf dem Bildschirm angezeigten Lage der weniger verdichteten Regionen 30 kann Fahrer die Route des Fahrzeugs 16 anpassen, so dass auch die Regionen 30 überrollt werden und eine auf der ganzen Oberfläche des Silos 13 im wesentlichen gleichmäßige Dichte der Schicht 21 erreicht wird. Alternativ kann auch der Bordcomputer 28 herangezogen werden, um zu entscheiden, ob die minder dichten Regionen 30 noch einer weiteren Verdichtung bedürfen (S6), und gegebenenfalls anhand der Positionen der minder dichten Regionen 30 eine Route für das Fahrzeug 16 festzulegen (Schritt S7), auf der diese mit kleinstmöglichem Aufwand nachverdichtet werden können, und zu Schritt S3 zurückkehren, um das Abfahren dieser Route durch das Fahrzeug 16 zu steuern und so die unzureichend verdichteten Regionen nachzuverdichten.

Wenn in Schritt S6 keine nachzuverdichtenden Regionen ermittelt werden, ist die Schicht 21 fertig verdichtet, und das Verfahren kann zu Schritt S1 zurückkehren, um auf der Schicht 21 eine neue Schicht Pflanzenmaterial auszubringen.

Das Bewegungsmuster des Fahrzeugs 16 bringt es mit sich, dass die weniger verdichteten Regionen 30 zwischen den Regionen 29 schmal und in Fahrtrichtung langgestreckt sind. Es ist leicht nachvollziehbar, dass solche Regionen 30 mit einer quer zur Fahrtrichtung langgestreckten Anordnung von Sensoren 1 wie etwa an der Unterkante des Schiebeschilds 18 nur dann sicher detektierbar sind, wenn der Abstand zwischen den Sensoren 1 kleiner ist als die Breite der Regionen 30. Um die Menge an benötigten Sensoren zu reduzieren und weniger verdichtete Regionen dennoch sicher erkennen und kartieren zu können, kann anstelle einer quer zur Fahrtrichtung ausgedehnten Anordnung von Sensoren 1 ein einzelner Sensor 1 vorgesehen werden, der relativ zum Fahrzeug 16 quer zu dessen Fahrtrichtung bewegbar ist. Indem ein solcher Sensor - wie in Fig. 7 durch eine strichpunktierte Linie veranschaulicht - quer zur Fahrtrichtung über die Oberfläche des Silos 13 bewegt wird, kreuzt er die weniger verdichteten Regionen 30 und kann diese auch bei geringer Breite detektieren.

Fig. 7 zeigt solch einen einzelnen Sensor 1 montiert auf einem Gleiter 31, der auf der Oberfläche des Silos 13 aufliegt. Der Gleiter 31 wird gezogen von einer Laufkatze 32, die an einer an einer Unterseite des Fahrzeugs quer zu dessen Fahrtrichtung orientierten Schiene 33 hin und herbewegt wird. Indem die Elektroden des Sensors 1 quer zu dessen Bewegungsrichtung orientiert sind, können Regionen 30 mit einer Breite erfasst werden, die so klein sein kann wie der Elektrodenabstand eines der Kondensatoren des Sensors 1.

Fig. 8 besteht aus zwei Diagrammen. Das linke Diagramm zeigt die Entwicklung der Dichte ρ der Schicht 21, wie durch den Sensor 1 gemessen, nach einer Anzahl n von Überfahrungen durch das Fahrzeug 16. Man erkennt, dass die Dichte ρ zwar nach jeder Überfahrung zunimmt, der Dichtezuwachs aber mit zunehmender Zahl der Überfahrungen abnimmt. Wenn die Abnahme einer bekannten Regel folgt, dann kann der Bordcomputer 28 diese Regel anwenden, um eine maximal erreichbare Dichte der Schicht 21 abzuschätzen, und basierend darauf eine Grenzdichte, in der Fig. 8 durch eine strichpunktierte Linie symbolisiert, festzulegen, bei der die Verdichtung der Schicht 21 abgebrochen werden kann, weil sie für die Silogärung ausreichend entlüftet ist. Damit eine solche Regel angegeben werden kann, müssen diverse Eigenschaften der Schicht 21 bekannt sein, wie etwa die Art des Pflanzenmaterials, aus der sie besteht, der Feuchtegehalt, Reifegrad etc.

Um eine zu erreichende Dichte auch dann angeben zu können, wenn diese Eigenschaften nicht oder nicht mit der nötigen Genauigkeit bekannt sind, werden die im linken Diagramm dargestellten, gemessenen Dichten mit Dichten verglichen, die in vergangenen Verdichtungsvorgängen gemessen worden sind. Deren Daten sind vorzugsweise nicht an Bord des Fahrzeugs gespeichert, sondern an einem zentralen Computer, z.B. einem CEMOS-System, und die gemessenen Dichten werden vom Bordcomputer 28 zur Auswertung dorthin übermittelt.

Das rechte Diagramm der Fig. 8 zeigt an dem zentralen Computer gespeicherte Datensätze verschiedener Verdichtungsvorgänge, jeweils gekennzeichnet durch unterschiedliche Symbole. Bei einem leicht verdichtbaren Material, dargestellt durch Kreuze, genügen wenige Überfahrungen, um eine starke Dichtezunahme zu erreichen; bei einem schwerer verdichtbaren, dargestellt durch Rauten, werden mehr Überfahrungen benötigt, bis sich die Dichte nicht mehr nennenswert ändert, und die Dichtezunahme ist insgesamt geringer. Um herauszufinden, wie weit das Material der aktuell bearbeiteten Schicht 21 verdichtbar ist, werden die gemessenen Dichten laufend mit den gespeicherten verglichen. Im hier exemplarisch gezeigten Fall genügt ein Vergleich der beiden ersten Dichtemesswerte, um zu erkennen, dass das Verdichtungsverhalten der Schicht 21 wohl am ehesten den durch Rauten oder Kreise dargestellten Datensätzen entspricht. Ab dem dritten Messwert zeichnet sich ab, dass das Material der Schicht 21 schlechter verdichtbar ist als das des durch Kreise dargestellten Datensatzes, und dass sein Verhalten am ehesten dem des durch Rauten dargestellten Datensatzes entspricht. Anhand von Dichtewerten dieses Datensatzes, die an der Schicht 21 noch gar nicht vorgenommenen Überfahrungen entsprechen, kann abgeschätzt werden, wie stark die Schicht 21 maximal verdichtbar ist, und der Verdichtungsprozess kann beendet (und ggf. eine neue Schicht Pflanzenmaterial auf den Silo aufgebracht werden) sobald diese Dichte erreicht ist. D.h. die Entscheidung des Schritts S6 ob ein Nachverdichten nötig ist, wird so oft mit ja beantwortet, bis genügend Dichtemesswerte vorliegen, um einen zu der Schicht 21 passsenden Datensatz zu identifizieren. Sobald dieser identifiziert worden ist, kann die maximale Dichte abgeschätzt werden, die die Schicht 21 erreichen kann, anhand dieser kann ein Grenzwert der Dichte festgelegt werden, und in weiteren Wiederholungen des Schritts S6 hängt die Frage, ob nachverdichtet werden muss, davon ab, ob dieser Grenzwert auf der gesamten oder im wesentlichen gesamten Schicht erreicht ist.

Für das oben anhand von Fig. 2 beschriebene Verfahren genügt ein Sensor, der für jeden Punkt der Schicht 21, an dem er platziert wird, genau einen Messwert der Dichte liefert. Der Sensor der Fig. 1 liefert mindestens zwei solche Messwerte, die für Dichten der Schicht in verschiedenen Abständen von der Oberfläche repräsentativ sind. Die mehreren für einen gleichen Punkt erhaltenen Messwerte können gemittelt werden, um anschließend in Schritt S6 anhand des Mittelwertes wie oben beschrieben zu entscheiden, ob ausreichend verdichtet ist. Denkbar ist aber auch, anhand der zwei Messwerte für einen oberflächen- und einen oberflächenfernen Teil der Schicht 21 jeweils einzeln zu entscheiden, ob die Verdichtung ausreichend ist, und eine Region weiter zu verdichten, wenn nur einer der Teile in der betreffenden Region nicht ausreichend verdichtet ist.

### Bezugszeichen

- 1: Sensor
- 2: Substrat
- 3: Elektrode
- 4: Mittelleiter
- 5: Finger
- 6: Elektrode
- 7: Leiter
- 8: Finger
- 9: Elektrode
- 10: Elektrode
- 11: Wechselspannungsquelle
- 12: Messinstrument
- 13: Fahrsilo
- 14: Grundplatte
- 15: Wand
- 16: Fahrzeug
- 17: Traktor
- 18: Schiebeschild
- 19: Rad
- 20: Unterkante
- 21: Schicht
- 22: elektrisches Feld
- 23: untere Grenze
- 24: Gleiter
- 25: Liftachse
- 26: Silowalze
- 27: Rahmen
- 28: Bordcomputer
- 29: (verdichtete) Region
- 30: (minder dichte) Region
- 31: Gleiter
- 32: Laufkatze
- 33: Schiene

## Patentansprüche

1. Verfahren zum Bearbeiten von Pflanzenmaterial mit den Schritten:
a) Bilden einer Schicht (21) aus dem Pflanzenmaterial (S1);
b) Platzieren eines Sensors (1), der wenigstens einen Kondensator mit zwei Elektroden (3, 9; 3, 10) aufweist, an einer Oberfläche der Schicht (21);
c) Beaufschlagen des Kondensators mit einem Wechselspannungssignal, um ein in die Schicht (21) eindringendes elektrisches Wechselfeld (22) zu erzeugen; und
d) Messen einer mit der Impedanz des Kondensators verknüpften Größe, um auf die Dichte des Pflanzenmaterials in der Schicht (21) zu schließen (S2),
**gekennzeichnet durch** die Schritte:
e) Entscheiden (S6), ob die Dichte des Pflanzenmaterials einer vorgegebenen Anforderung genügt;
f) Verdichten (S3) der Schicht (21), wenn entschieden wird, dass die Dichte des Pflanzenmaterials der Anforderung nicht genügt.

2. Verfahren nach Anspruch 1, bei dem aus den in Schritt d) gemessenen Daten eine Dichtekarte der Schicht (21) erstellt wird, die die Dichte der Schicht (21) für verschiedene Regionen 29, 30) der Schicht (21) ortsaufgelöst angibt, und die Schritte e) und f) für verschiedene Regionen (29, 30) der Schicht (21) unabhängig voneinander durchgeführt werden.

3. Verfahren nach Anspruch 1 oder 2, bei dem nach dem Verdichten (S3) wenigstens einer Region (29, 30) der Schicht (21) die Dichte der Schicht in der Region (29, 30) erneut ermittelt wird (S2) und ein Zielwert der Dichte der Schicht (21) anhand für die Region sukzessive ermittelter Dichten festgelegt wird, wobei optional die Festlegung unter Rückgriff auf Daten früherer Bearbeitungsvorgänge erfolgt.

4. Verfahren nach einem der vorhergehenden Ansprüche, bei dem in Schritt e) das Verdichten (S3) durch Überfahren der Schicht (21) mit einem Fahrzeug (16) erfolgt.

5. Verfahren nach Anspruch 4, bei dem anhand der den in Schritt d) erfassten Daten eine beim Verdichten abzufahrende Route für das Fahrzeug (16) festgelegt wird.

6. Verfahren nach Anspruch 4 oder 5, bei dem der Sensor (1) an dem Fahrzeug (16), optional an einer Liftachse (25), einer Silowalze (26) oder einem Schiebeschild (17) des Fahrzeugs (16), montiert ist, weiter optional der Sensor (1) am Fahrzeug (16) quer zu dessen Fahrtrichtung bewegbar ist.

7. Verfahren nach Anspruch 4, 5 oder 6, bei dem
a) eine aus Daten des Sensors (21) erstellte Dichtekarte am Fahrzeug (16) angezeigt wird; und/oder
b) Daten des Sensors (1) an einen fahrzeugexternen Computer, insbesondere ein CEMOS-System, übertragen werden, und ein Zielwert der Dichte von dem fahrzeugexternen Computer festgelegt wird.

8. Verfahren nach einem der vorhergehenden Ansprüche, bei dem die Schritte a) des Bildens einer Schicht (21), d) des Messens und f) des Verdichtens auf der Oberfläche einer bereits verdichteten Schicht vorgenommen werden.

9. Verfahren nach einem der vorhergehenden Ansprüche, bei dem in Schritt a) die Schicht (21) mit einer solchen Dicke gebildet wird, dass spätestens nach einmaligem Verdichten einer Region (29) der Schicht (21) die Eindringtiefe des elektrischen Wechselfelds (22) des Kondensators sich über die gesamte Dicke der Region (29) erstreckt.

10. Verfahren nach einem der vorhergehenden Ansprüche, bei dem der Sensor (1) mehrere Kondensatoren umfasst, wobei der Abstand zwischen den Elektroden (3, 6; 3, 9; 3, 10). für jeden der mehreren Kondensatoren unterschiedlich ist, bei dem in Schritt c) jeder der Kondensatoren mit einem Wechselspannungssignal beaufschlagt wird und in Schritt d) die mit der Impedanz verknüpfte Größe für jeden Kondensator gemessen wird, um auf die Dichte des Pflanzenmaterials in verschieden Abständen von der Oberfläche der Schicht (21) zu schließen.

11. System zum Bestimmen einer Dichte einer Schicht aus Pflanzenmaterial, umfassend einen Sensor (1), der wenigstens einen Kondensator mit zwei Elektroden aufweist, eine Wechselspannungsquelle (11) zum Beaufschlagen des Kondensators mit einem Wechselspannungssignal und einen Prozessor (28), der angepasst und/oder konfiguriert ist, um die Schritte c) bis e) des Verfahrens nach einem der vorherigen Ansprüche auszuführen.

12. Computerprogramm, umfassend Instruktionen, deren Ausführung durch einen Computer (28) diesen veranlasst, die Schritte c) bis e) des Verfahrens nach einem der Ansprüche 1 bis 10 auszuführen.

13. Landwirtschaftliches Fahrzeug (16) mit einem System nach Anspruch 11.
